# EUROPÄISCHE PATENTSCHRIFT

(11) **EP 1 909 061 B1**
(45) Veröffentlichungstag und Bekanntmachung des Hinweises auf die Patenterteilung: **19.11.2008**
(21) Anmeldenummer: 08000414.6
(22) Anmeldetag: 07.09.2005
(51) Int. Cl.: G01B 7/06, F01D 5/18

(54) **Verfahren zum Ermitteln der Wanddicke eines hohlen Bauteils**
Method for determining the wall thickness of a hollow component
Procédé destiné à la détermination de l'épaisseur de paroi d'un composant creux

(30) Priorität: 03.11.2004 EP 04026104
(43) Veröffentlichungstag der Anmeldung: 09.04.2008
(62) Teilanmeldung aus: 05787211.1
(73) Patentinhaber: SIEMENS AKTIENGESELLSCHAFT, 80333 München (DE)
(72) Erfinder: Bast, Ulrich, Dr., 81667 München (DE); Jabado, Rene, 14199 Berlin (DE); Krüger, Ursus, Dr., 14089 Berlin (DE); Körtvelyessy, Daniel, 13469 Berlin (DE); Reiche, Ralph, 13465 Berlin (DE); Rindler, Michael, 15566 Schöneiche (DE); Wilkenhöner, Rolf, Dr., 14532 Kleinmachnow (DE)

(56) Entgegenhaltungen:
- EP-A- 1 394 360
- US-A- 5 373 235
- US-A- 5 416 411
- HOHMANN R ET AL: "Aircraft wheel testing with machine-cooled HTS SQUID gradiometer system" IEEE TRANSACTIONS ON APPLIED SUPERCONDUCTIVITY IEEE USA, Bd. 9, Nr. 2, Juni 1999 (1999-06), Seiten 3801-3804, XP002321890 ISSN: 1051-8223

## Beschreibung

Die vorliegende Erfindung betrifft ein Verfahren zum Ermitteln der Wanddicke eines hohlen Bauteils, insbesondere eines hohlen Turbinenbauteils wie zum Beispiel einer hohlen Turbinenschaufel.

Zum Ermitteln der Wanddicke eines hohlen Bauteils kommen heute zumeist Ultraschallmessverfahren oder Wirbelstrommessverfahren zur Anwendung.

Bei Ultraschallmessverfahren wird eine Ultraschallwelle an der Oberfläche der Wand, deren Dicke zu ermitteln ist, erzeugt und die Laufzeit der Ultraschallwelle vom Erzeugungspunkt zur Rückseite der Wand, an welcher ein Teil der Welle reflektiert wird, und zurück zur Ursprungsstelle gemessen. Bei bekannter Schallgeschwindigkeit im Material der Wand kann aus der Laufzeit der Ultraschallwelle die Wanddicke bestimmt werden. Bei sehr dünnen Wänden stößt diese Methode jedoch an ihre Grenzen, da der Zeitpunkt der Ankunft der reflektierten Ultraschallwelle nicht eindeutig bestimmt werden kann. Für hohle Bauteile, die aus einer auf Nickel oder Kobalt basierenden Legierung hergestellt sind, beträgt die minimale Wanddicke, die mittels des Ultraschallverfahrens ermittelt werden kann, etwa 0,5 mm. Dies ist insbesondere für Turbinenbauteile wie etwa Turbinenschaufeln von Bedeutung, da diese häufig aus Basislegierungen hergestellt sind, die auf Nickel oder Kobalt basieren. Ultraschallmessverfahren sind bspw. in der DE 191 09 568 A1 beschreiben.

In einem Wirbelstrommessverfahren wird ein zeitlich veränderliches Magnetfeld, das bspw. von einer wechselstromdurchflossenen Erregerspule erzeugt wird, dazu benutzt, Wirbelströme, in der Wand des Bauteils zu induzieren, die wiederum ein Magnetfeld, ein sog. Sekundär-Magnetfeld, in der Wand induzieren. Anhand des Sekundär-Magnetfeldes kann die Impedanz (also der Realteil und den Imaginärteil des komplexen Widerstandes) der Wand gemessen werden. Aus der Impedanzmessung kann anhand des Vergleiches mit einer Referenzmessung an einem Referenzkörper die Wanddicke ermittelt werden.

Ein alternatives Wirbelstrommessverfahren induziert in der Wand, deren Dicke zu ermitteln ist, Wirbelströme mittels Magnetfeldern, deren Frequenz bspw. zwischen 500 kHz und 20 mHz variiert wird. Anhand einer Messung der Impedanz als Funktion der Frequenz des erregenden Magnetfeldes kann die Dicke der Wand ermittelt werden. Mit abnehmender Frequenz des erregenden Feldes vergrößert sich nämlich die Eindringtiefe der Wirbelströme in das Material. Bei genügend niedriger Frequenz erreicht das induzierte Sekundär-Magnetfeld daher den Hohlraum der Schaufel, was mit einer charakteristischen Zunahme der Impedanz einhergeht. Die Wandstärke kann dann aus der Frequenz ermittelt werden, bei der die Zunahme der Impedanz auftritt. Wirbelstrommessverfahren sind bspw. in der WO 99/26062 A1 beschrieben.

US-A-5 373 235 beschreibt ein Verfahren zur magnetischen Ermittlung der Wandstärke eines Hohlkörpers. Dazu wird der Hohlkörper mit einer Flüssigkeit gefüllt, in der ferromagnetische Partikel als Suspension enthalten sind.

Gegenüber dem vorliegenden Stand der Technik ist es Aufgabe der Erfindung, ein vorteilhaftes Verfahren zum Ermitteln der Wanddicke eines hohlen Bauteils zur Verfügung zu stellen.

Diese Aufgabe wird durch ein Verfahren zum Ermitteln der Wanddicke eines hohlen Bauteils nach Anspruch 1 gelöst. Die abhängigen Ansprüche enthalten vorteilhafte Ausgestaltungen des erfindungsgemäßen Verfahrens.

Im erfindungsgemäßen Verfahren zum Ermitteln der Wanddicke eines hohlen Bauteils wird ein zeitlich veränderliches Magnetfeld dazu genutzt, ein Sekundär-Magnetfeld in einer einen Hohlraum des Bauteils umgebenden Bauteilwand zu induzieren. Das Magnetfeld kann dabei bspw. mittels einer wechselstromdurchflossenen Erregerspule erzeugt werden. Das Ermitteln der Dicke der Bauteilwand erfolgt durch Erfassen mindestens einer das Sekundär-Magnetfeld beeinflussenden Größe der Wand, die bspw. die Impedanz oder insbesondere die Permeabilität der Wand sein kann. Im erfindungsgemäßen Verfahren wird vor dem Erfassen der mindestens einen Größe ein ferromagnetisches Material in den Hohlraum eingebracht. Als ferromagnetisches Material kann dabei insbesondere ein ferromagnetisches Metall, eine ferromagnetische Legierung oder ein ferromagnetischer keramischer Werkstoff mit hoher magnetischer Permeabilität Verwendung finden. Bspw. im Vergleich zu für das Herstellen von Turbinenschaufeln verwendeten Werkstoffen, weist das ferromagnetische Material eine um Zehnerpotenzen (10⁷ bis 10¹⁰) höhere Permeabilitätszahl µᵣ auf. Dieser Unterschied lässt sich mittels Wirbelstromtechnik gut nachweisen. Das ferromagnetische Material kann in alle nach außen zugänglichen Hohlräume eingebracht werden. Dies lässt eine universelle Wanddickenbestimmung an hohlen Bauteilen, insbesondere an hohlen Gasturbinenschaufeln, zu.

Falls die Wanddicke von Gasturbinenschaufeln, welche häufig aus Basislegierungen hergestellt sind, die auf Nickel oder Kobalt basieren, ermittelt werden soll, eignet sich als ferromagnetisches Metall insbesondere Nickel oder Kobalt oder als ferromagnetische Legierung eine Legierung mit hohem Nickel- oder Kobaltanteil, da diese ferromagnetischen Materialien die auf Nickel- oder Kobalt basierende Basislegierung der Turbinenschaufel, wenn überhaupt, nur wenig kontaminieren. Selbstverständlich sind die genannten Metalle oder Legierungen auch für das Ermitteln der Wanddicke von anderen aus Nickel - oder Kobalt enthaltenden Basislegierungen hergestellten hohlen Bauteilen besonders geeignet.

Erfindungsgemäß wird als ferromagnetisches material ferromagnetisches Pulver in ein flüssiges Wachs oder einen flüssigen Kunststoff eingebracht. Der Hohlraum wird dann teilweise oder vollständig mit dem das ferromagnetische Pulver enthaltenden flüssigen Wachs bzw. flüssigen Kunststoff gefüllt. Das Erfassen der mindestens einen Größe erfolgt, nachdem das Wachs bzw. der Kunststoff getrocknet ist. Nach dem Erfassen aller für das Ermitteln der Wanddicke nötigen Größen wird das Wachs bzw. der Kunststoff wieder ausgebrannt oder ausgeschmolzen. Anschließend können eventuelle Pulverreste rückstandsfrei ausgewaschen werden.

In einer Ausgestaltung des erfindungsgemäßen Verfahrens erfolgt das Ermitteln der Dicke der Bauteilwand, indem die mindestens eine Größe sowohl mit an die zu messende Bauteilwand, angehaltener Messsonde erfasst wird, als auch für verschiedene Abstände der Messsonde über einem Referenzkörper aus einem ferromagnetischen Material, das dem auf die Innenseite der Bauteilwand aufgebrachten ferromagnetischen Material zumindest ähnelt. Die mindestens eine mit an die Bauteilwand angehaltener Messsonde erfasste Größe wird dann mit den für die verschiedenen Abstände der Messsonde über dem Referenzkörper erfassten Größen verglichen. Derjenige Abstand zwischen der Messsonde und dem Referenzkörper, welcher die Größe liefert, die der für die Wand gemessenen Größe am ähnlichsten ist, entspricht im Wesentlichen der Dicke der Wand. Mit dem beschriebenen Verfahren kann die gesamte Wand einer hohlen Turbinenschaufel vermessen werden. Als Obergrenze für diese Vorgehensweise sind Wandstärken von ca. 5 bis 6 mm anzunehmen.

In einer alternativen Ausgestaltung des erfindungsgemäßen Verfahrens erfolgt das Ermitteln der Dicke der Bauteilwand, indem die Frequenz des erregenden zeitlich veränderlichen Magnetfeldes variiert wird. Als die mindestens eine Größe wird die Permeabilität der Wand als Funktion der Frequenz des zeitlich veränderlichen Magnetfeldes erfasst. Aus dem Verlauf der Permeabilität als Funktion der Frequenz kann dann die Wanddicke ermittelt werden. Das auf die Innenseite der Bauteilwand aufgebrachte ferromagnetische Material führt nämlich zu einem charakteristischen Steilanstieg der Permeabilität, wenn die Wirbelströme die Innenfläche der Wand erreichen. Das ferromagnetische Material verstärkt dabei aufgrund seiner Magnetisierbarkeit das Sekundär-Magnetfeld, welches durch die Wirbelströme induziert wird, wesentlich. Das Sekundär-Magnetfeld wird von der Wirbelstromsonde gemessen. Es ist somit das eigentliche Messsignal. Im Vergleich zu Messungen der elektrischen Leitfähigkeit als Funktion der Frequenz, wie dies im Stand der Technik erfolgt, wird die Messgenauigkeit erhöht und die Nachweisgrenze im Hinblick auf größere Wanddicken verbessert.

Mit dem erfindungsgemäßen Verfahren können im Vergleich zu Ultraschallmessungen, wie sie im Stand der Technik durchgeführt werden, Wandstärken von weniger als 0,5 mm gut vermessen werden.

Weiter Merkmale, Eigenschaften und Vorteile der vorliegenden Erfindung ergeben sich aus der nachfolgenden Beschreibung von Ausführungsbespielen unter Bezugnahme auf die beiliegenden Figuren.
Figur 1 zeigt ein Verfahren zum Einbringen eines ferromagnetischen Materials in den Hohlraum eines hohlen Bauteils.
Figur 2 zeigt das Ermitteln der Wanddicke des hohlen Bauteils aus Fig. 1 nach dem Einbringen des ferromagnetischen Materials.
Figur 3 zeigt in einer vereinfachten Darstellung die Abhängigkeit der für eine Bauteilwand gemessenen Permeabilität von der Frequenz eines erregenden Magnetfeldes.
Figur 4 zeigt in einer stark schematisierten Darstellung einen Verfahrensschritt einer ersten Variante des Verfahrens zum Ermitteln der Wanddicke eines hohlen Bauteils.
Figur 5 zeigt beispielhaft eine Gasturbine in einem Längsteilschnitt.
Figur 6 zeigt in perspektivischer Ansicht eine Laufschaufel oder Leitschaufel einer Strömungsmaschine.
Figur 7 zeigt eine Brennkammer einer Gasturbine

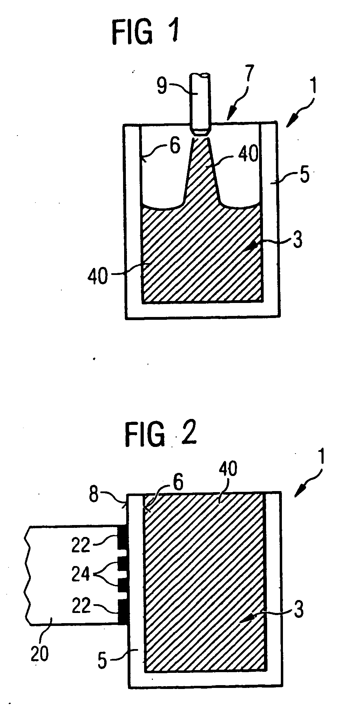

In Figur 1 ist das Aufbringen einer ferromagnetischen Beschichtung auf die Innenseite der Wand eines hohlen Bauteils nach dem Stand der Technik dargestellt.

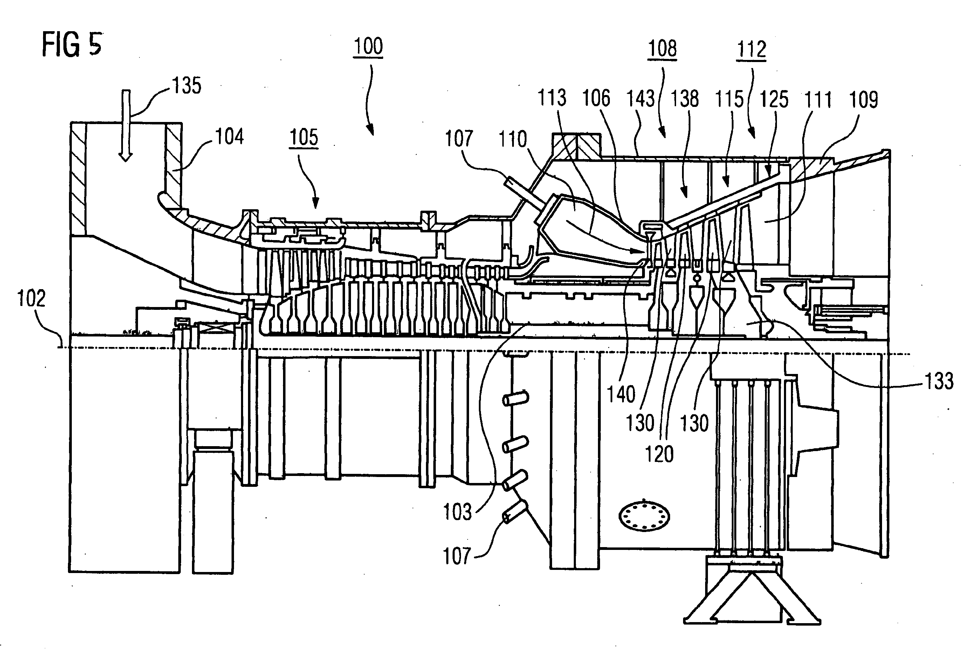

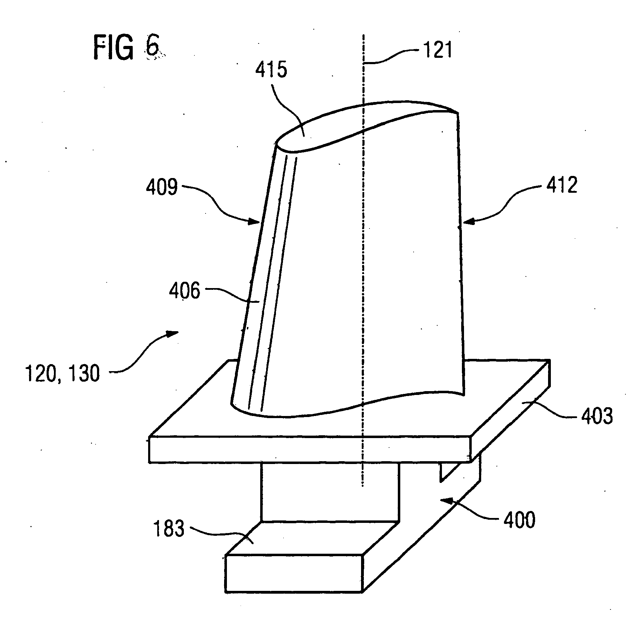

Das Bauteil 1, das insbesondere eine hohle Gasturbinenschaufel 120, 130 (Fig. 5, 6) sein kann, ist in Figur 1 in einer stark schematisierten Darstellung im Schnitt gezeigt. Es weist einen Hohlraum 3 auf, der von einer Bauteilwand 5 begrenzt wird. Über eine Öffnung 7 ist der Hohlraum 3 vom Äußeren des Bauteils 1 her zugänglich.

Durch die Öffnung 7 wird eine Spritzdüse 9 in den Hohlraum 3 des Bauteils 1 eingeführt. Die Spritzdüse 9 wird dazu verwendet, den gesamten Hohlraum 3 mit ferromagnetischem Material auszufüllen. Dazu wird ein Wachs 40, dem ein ferromagnetisches Pulver beigemischt ist, durch die Öffnung 7 in den Hohlraum 3 des Behälters 1 eingefüllt. Dabei kann die Spritzdüse 9 gegebenenfalls auch relativ zur Bauteilwand 5 innerhalb des Hohlraumes bewegt werden.

Nachdem der Hohlraum 3 vollständig mit dem Wachs 40 gefüllt ist und das Wachs 40 getrocknet ist, kann die Wanddicke ermittelt werden.

Zum Ermitteln der Wanddicke des Bauteils 1 wird eine Messsonde 20 mit der Außenseite 8 der Bauteilwand 5 in Kontakt gebracht. Die Messsonde 20, die in der Figur 2 im Schnitt dargestellt ist, umfasst eine Erregerspule 22 und eine Messeinheit 24, die ebenfalls als Spule ausgebildet sein kann.

Mittels eines durch die Erregerspule 22 fließenden Wechselstroms wird ein zeitlich veränderliches Magnetfeld erzeugt, welches in die Bauteilwand 5 eindringt. In der Bauteilwand 5 verursacht es Wirbelströme, die ihrerseits zu einem zeitlich veränderlichen Magnetfeld, dem so genannten Sekundär-Magnetfeld führen. Die Eigenschaften des Sekundär-Magnetfeldes werden durch die physikalischen Größen des Materials der Bauteilwand beeinflusst. Insbesondere übt die Permeabilität µᵣ einen starken Einfluss auf das Sekundär-Magnetfeld aus.

Da die ferromagnetische Beschichtung 11 eine deutlich höhere Permeabilität µᵣ als das Material der Bauteilwand 5 aufweist, übt es einen im Vergleich zum Einfluss der Bauteilwand 5 dominierenden Einfluss auf das Sekundär-Magnetfeld aus. Mittels der Empfängerspule (24) kann durch Messen des Sekundär-Magnetfeldes die Permeabilität erfasst werden.

Das Ermitteln der Wanddicke des Bauteils 1 aus dem Signal der Empfängerspule 24 kann auf verschiedene Weisen erfolgen.

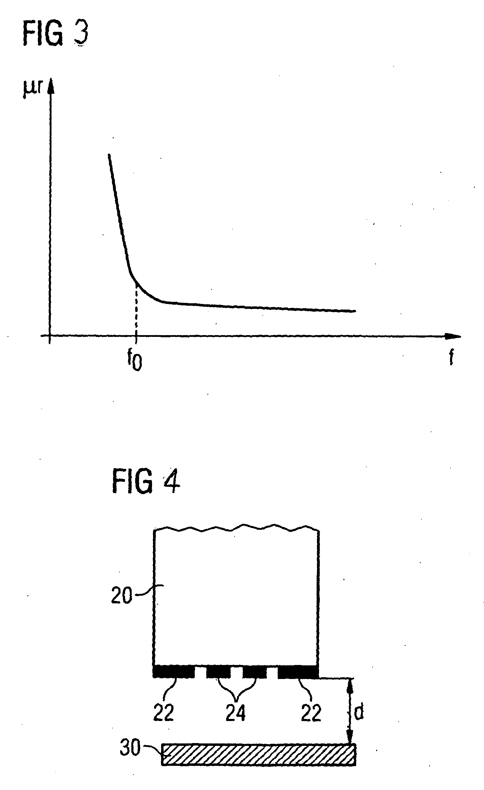

Eine Möglichkeit, die Wanddicke zu ermitteln, ist in Figur 3 dargestellt. Diese beruht darauf, die Frequenz des durch die Erregerspule 22 fließenden Wechselstroms zu variieren, bspw. zwischen 500 kHz und 20 MHz. Je höher die Frequenz des durch die Erregerspule 22 fließenden Wechselstromes ist, desto weniger tief dringt das zeitlich veränderliche Magnetfeld in die Bauteilwand 5 ein. Die Wanddicke kann daher bestimmt werden, indem bspw. die Frequenz des durch die Erregerspule 22 fließenden Wechselstroms ausgehend von einer hohen Frequenz verringert wird. Mit zunehmender Frequenzverringerung dringt das zeitlich veränderliche Magnetfeld immer tiefer in die Bauteilwand ein und erreicht bei einer bestimmten Frequenz f₀ die ferromagnetische Beschichtung 11. Bei dieser Frequenz f₀ steigt die von der Empfängerspule 24 erfasste Permeabilität steil an. Aus der Frequenz f₀, bei der dieser steile Anstieg auftritt, kann die Wanddicke der Behälterwand 5 ermittelt werden.

Eine alternative Vorgehensweise zum Ermitteln der Dicke der Bauteilwand 5 ist in Figur 4 schematisch dargestellt. In dieser Vorgehensweise findet keine Variation der Frequenz des durch die Erregerspule 22 fließenden Wechselstromes statt, d.h. die Messung wird bei einer festen Frequenz des zeitlich veränderlichen Magnetfeldes durchgeführt. Zum Ermitteln der Wanddicke wird zum einen das in der Empfängerspule 24 verursachte Signal bei an der Außenseite 8 der Behälterwand 5 anliegender Messsonde 20 (Fig. 2) erfasst.

In weiteren Schritten wird die Messsonde 20 in verschiedene definierte Abstände zu einem Referenzkörper 30 gebracht, der aus demselben oder einem sehr ähnlichen Material wie die Ferromagnetische Beschichtung aufgebaut ist (Fig. 4). Für die verschiedenen Abstände d wird das Signal in der Messspule 24 erfasst, das ein von der Erregerspule 22 ausgehendes zeitlich veränderliches Magnetfeld verursacht, das dieselben Parameter aufweist, wie das Magnetfeld, das bei an die Außenseite 8 der Behälterwand 5 angelegter Messsonde 20 Verwendung fand. Die für die verschiedenen Abstände d erfassten Signale werden mit demjenigen Signal verglichen, das die Messspule 24 bei an die Behälterwand 5 angelegter Messsonde erfasst hat. Derjenige Abstand, bei dem das Signal dem Signal der an die Behälterwand 5 angelegten Messsonde 20 am meisten ähnelt, entspricht der Wanddicke der Behälterwand 5. Nachdem alle für das Ermitteln der

Wanddicke relevanten Parameter erfasst sind, wird das Wachs 40 ausgebrannt oder ausgeschmolzen. Eventuelle Reste des ferromagnetischen Pulvers können anschließend rückstandsfrei ausgewaschen werden.

Anstatt mit einem ferromagnetischen Pulver enthaltenden Wachs, kann in diesem Ausführungsbeispiel der Hohlraum 3 auch mit einem ferromagnetisches Pulver enthaltenden Kunststoff gefüllt werden. Insbesondere bieten sich dabei thermoplastische Kunststoffe an, da diese bei Abkühlung aushärten und sich bei Erwärmen wieder verflüssigen.

Das ferromagnetische Pulver kann beispielsweise ferromagnetische Metälle, insbesondere Eisen (Fe), Kobalt (Co) oder Nickel (Ni) sein. Alternativ können auch ferromagnetische Legierungen aus weichmagnetischen Werkstoffen wie Fe-Si-, Fe-A1, oder Fe-Ni-Legierungen, aus hartmagnetischen Werkstoffen wie Fe-Al-Ni-Co- oder Sm-Co-Fe-Legierungen sowie Heuslersche Legierungen Verwendung finden. Heuslersche Legierungen sind bspw. in A.F. Hollemann, E. Wiberg "Lehrbuch der anorganischen Chemie "91. 100. Auflage, Walter de Gruyter, Berlin, New York, 1985 beschrieben.

Neben ferromagnetischen Metallen und ferromagnetischen Legierungen kommen auch ferromagnetische keramische Werkstoffe zur Verwendung als ferromagnetisches Material in den Ausführungsbeispielen in Betracht.

Als Messsonde können herkömmliche Wirbelstrommesssonden Verwendung finden. Ein möglicher Aufbau der Messsonde kann der WO 99/26062 A1 sowie den darin genannten Druckschriften entnommen werden. Auf die Offenbarung der WO 99/26062 A1 und der darin genannten Druckschriften wird daher bezüglich eines möglichen Aufbaus der Messsonde (20) verwiesen.

Als Messsonden können auch die so genannten Squid (Superconducting-quantum-interference-device) zur Bestimmung der Wandstärke benutzt werden. Aufgrund der ernormen Empfindlichkeit der Squid im Vergleich zu konventionellen Magnetfeldsensoren kann die Wanddicke in hinreichender Genauigkeit bestimmt werden. Hier wird eine Messgenauigkeit von ca. 0,1mm und besser angestrebt. Am besten werden Squids aus Hochtemperatursupraleitern verwendet, die mit flüssigem Stickstoff gekühlt werden können und daher leichter handhabbar sind. Somit können kleine Abstände zu der vermessenen Bauteiloberfläche realisiert und eine hinreichende laterale Auflösung bei dem Messverfahren erzielt werden.

Oft werden in die Turbinenschaufeln noch Bohrungen für Kühlluftkanäle eingebracht, wobei es auch hier wichtig ist, dass gewisse Wanddicken eingehalten werden.

Das erfindungsgemäße Verfahren kann daher auch zur Bestimmung der Wanddicke bzw. des Abstandes der hergestellten Kühlluftbohrung im Inneren benutzt werden. Der Hohlraum 3 gemäß Figur 1 oder 2 entspricht dabei einem Kühlluftkanal im Inneren einer Turbinenschaufel 120, 130.

Die Figur 5 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1204776 B1, EP 1306454, EP 1319729 A1, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Figur 6 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1204776 B1, EP 1306454, EP 1319729 A1, WO 99/67435 oder WO 00/44949 bekannt. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions-und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

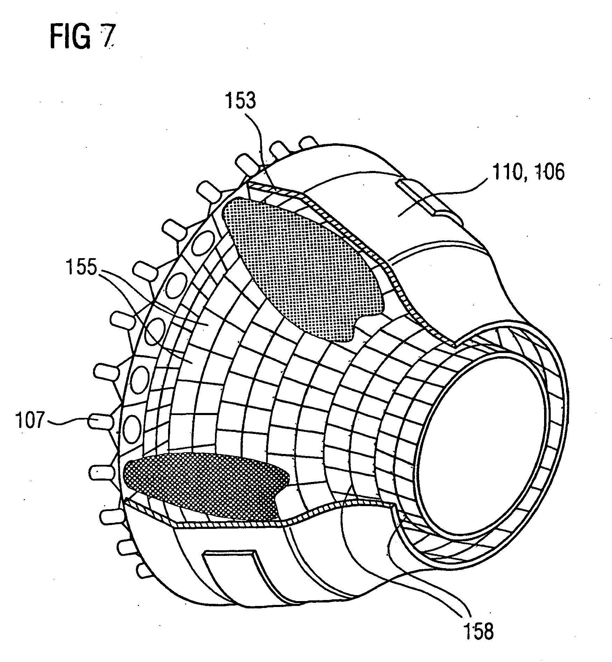

Die Figur 7 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein. Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

## Patentansprüche

1. Verfahren zum Ermitteln der Wanddicke eines hohlen Bauteils (1),
in welchem ein zeitlich veränderliches Magnetfeld dazu genutzt wird,
ein Sekundär-Magnetfeld in einer einen Hohlraum (3)des Bauteils (1) umgebenden Bauteilwand (5) zu induzieren und
in welchem das Ermitteln der Dicke der Bauteilwand (5) durch Erfassen mindestens einer das Sekundär-Magnetfeld beeinflussenden Größe der Bauteilwand (5) erfolgt, wobei
vor dem Erfassen der mindestens einen Größe ein ferromagnetisches Material (40) in den Hohlraum (3) eingebracht wird,
darduch **gekennzeichnet**, dass als ferromagnetiches Material ferromagnetisches Pulver in ein flüssiges Wachs (40) oder einen flüssigen Kunststoff eingebracht ist,
dass der Hohlraum (3) teilweise oder vollständig mit dem das ferromagnetische Pulver enthaltenden flüssigen Wachs (40) bzw. flüssigen Kunststoff gefüllt wird und der Kunststoff getrocknet wird bevor das Erfassen der mindestens einen Größe erfolgt.

2. Verfahren nach Anspruch 1,
**dadurch gekennzeichnet, dass**
als ferromagnetisches Material (40) ein ferromagnetisches Metall, eine ferromagnetische Legierung oder ein ferromagnetischer keramischer Werkstoff mit hoher magnetischer Permeabilität Verwendung findet.

3. Verfahren nach Anspruch 2,
**dadurch gekennzeichnet, dass**
als ferromagnetisches Metall Nickel oder Kobalt oder als ferromagnetische Legierung eine Legierung mit hohem Nickel- oder Kobaltanteil Verwendung findet.

4. Verfahren nach Anspruch 1,
**dadurch gekennzeichnet, dass**
das Wachs (40) bzw. der Kunststoff nach dem Abschluss des Erfassens aller für das Ermitteln der Wanddicke nötigen Größen ausgebrannt oder ausgeschmolzen wird.

5. Verfahren nach Anspruch 4,
**dadurch gekennzeichnet, dass**
nach dem Ausbrennen bzw. nach dem Ausschmelzen eventuelle Pulverreste ausgewaschen werden.

6. Verfahren nach einem der Ansprüche 1 bis 5,
**dadurch gekennzeichnet, dass**
das Ermitteln der Dicke der Bauteilwand (5) erfolgt, indem
- die mindestens eine Größe sowohl mit an die Bauteilwand (5), deren Wanddicke zu bestimmen ist, angehaltener Messsonde (20) erfasst wird, als auch für verschiedene Abstände der Messsonde (20) über einem Referenzkörper (30) aus einem ferromagnetischen Material, das dem auf die Bauteilwand (5) aufgebrachten ferromagnetischen Material (40) zumindest ähnelt, und
- die mit an die Bauteilwand (5) angehaltener Messsonde erfasste mindestens eine Größe mit den für die verschiedenen Abstände der Messsonde über dem Referenzkörper (30) erfassten Größen verglichen wird.

7. Verfahren nach einem der Ansprüche 1 bis 6,
**dadurch gekennzeichnet, dass**
das Ermitteln der Dicke der Bauteilwand (5) erfolgt, indem
- die Frequenz des zeitlich veränderlichen Magnetfeldes variiert wird,
- als die mindestens eine Größe die Permeabilität der Wand als Funktion der Frequenz des zeitlich veränderlichen Magnetfeldes erfasst wird und
- die Wanddicke aus dem Verlauf der Permeabilität als Funktion der Frequenz ermittelt wird.

8. Verfahren nach einem der vorherigen Ansprüche,
**dadurch gekennzeichnet, dass**
ein SQUID als Messsonde (20) verwendet wird.

## Claims

1. Method for determining the wall thickness of a hollow component (1),
in which a time-variant magnetic field is used
to induce a secondary magnetic field in a component wall (5) enclosing a cavity (3) of the component (1), and in which the thickness of the component wall (5) is determined by recording at least one quantity of the component wall (5), which influences the magnetic field, wherein
before the at least one quantity is recorded, a ferromagnetic material (40) is introduced into the cavity (3),
**characterized in that**, as ferromagnetic material, ferromagnetic powder is introduced into a liquid wax (40) or a liquid plastic,
**in that** the cavity (3) is partially or completely filled with the liquid wax (40) or liquid plastic containing the ferromagnetic powder and the plastic is dried before the at least one quantity is recorded.

2. Method according to Claim 1,
**characterized in that**
a ferromagnetic metal, a ferromagnetic alloy or a ferromagnetic ceramic material with a high magnetic permeability is employed as the ferromagnetic material (40).

3. Method according to Claim 2,
**characterized in that**
nickel or cobalt is employed as a ferromagnetic metal or an alloy with a high nickel or cobalt content is used as a ferromagnetic alloy.

4. Method according to Claim 1,
**characterized in that**
the wax (40) or the plastic are burned off or melted after having concluded the recording of all quantities necessary for determining the wall thickness.

5. Method according to Claim 4,
**characterized in that**,
after burning off or after melting, any remains of powder are washed away.

6. Method according to one of Claims 1 to 5,
**characterized in that**
the thickness of the component wall (5) is determined by
- measuring the at least one quantity both with a measurement probe (20) held against the component wall (5) whose wall thickness is to be found, and for different distances of the measurement probe (20) above a reference body (30) made of a ferromagnetic material, which is at least similar to the ferromagnetic material (40) applied onto the component wall (5), and
- the at least one quantity recorded with the measurement probe held against the component wall (5) is compared with the quantities recorded for the different distances of the measurement probe above the reference body (30).

7. Method according to one of Claims 1 to 6,
**characterized in that**
the thickness of the component wall (5) is determined by
- varying the frequency of the time-variant magnetic field,
- measuring the permeability of the wall as the at least one quantity, as a function of the frequency of the time-variant magnetic field, and
- determining the wall thickness from the profile of the permeability as a function of the frequency.

8. Method according to one of the preceding claims,
**characterized in that**
a SQUID is used as the measurement probe (20).

## Revendications

1. Procédé de détermination de l'épaisseur de parois d'un élément ( 1 ) constitutif creux,
dans lequel on utilise à cet effet un champ magnétique variable dans le temps,
pour induire un champ magnétique secondaire dans une paroi ( 5 ) de l'élément constitutif entourant une cavité ( 3 ) de l'élément ( 1 ) constitutif, et
dans lequel on effectue la détermination de l'épaisseur de la paroi ( 5 ) de l'élément constitutif en détectant au moins une grandeur de la paroi ( 5 ) de l'élément constitutif, qui influence le champ magnétique secondaire, dans lequel
avant la détection de la au moins une grandeur, on introduit un matériau ( 40 ) ferromagnétique dans la cavité ( 3 ),
**caractérisé en ce que**, comme matériau ferromagnétique, on introduit de la poudre ferromagnétique dans une cire ( 40 ) liquide ou dans une matière plastique liquide,
**en ce que** l'on remplit la cavité ( 3 ) en tout ou partie de la cire ( 40 ) liquide ou de la matière plastique liquide contenant la poudre ferromagnétique et on sèche la matière plastique avant d'effectuer la détection de la au moins une grandeur.

2. Procédé selon la revendication 1,
**caractérisé en ce que**
on utilise, comme matériau ( 40 ) ferromagnétique, un métal ferromagnétique, un alliage ferromagnétique ou un matériau céramique ferromagnétique ayant une grande perméabilité magnétique.

3. Procédé selon la revendication 2,
**caractérisé en ce que**
l'on utilise, comme métal ferromagnétique, du nickel ou du cobalt ou, comme alliage ferromagnétique un alliage ayant une grande proportion de nickel ou de cobalt.

4. Procédé selon la revendication 1,
**caractérisé en ce que**
l'on élimine par cuisson ou par fusion la cire ( 40 ) de la matière plastique après la fin de la détection de toutes les grandeurs nécessaires à la détermination de l'épaisseur de la paroi.

5. Procédé selon la revendication 4,
**caractérisé en ce que**
après l'élimination par cuisson ou par fusion, on élimine par lavage des restes éventuels de poudre.

6. Procédé selon l'une des revendications 1 à 5,
**caractérisé en que**
on effectue la détermination des épaisseurs de la paroi ( 5 ) de l'élément constitutif
- en détectant la au moins une grandeur, tant par une sonde de mesure maintenue sur la paroi ( 5 ) de l'élément constitutif dont on doit déterminer l'épaisseur qu'également pour des distances différentes de la sonde ( 20 ) de mesure sur un corps ( 30 ) de référence en un matériau ferromagnétique qui ressemble au moins au matériau ( 40 ) ferromagnétique déposé sur la paroi ( 5 ) de l'élément constitutif et
- en comparant la au moins une grandeur détectée sur la sonde de mesure maintenue sur la paroi ( 5 ) de l'élément constitutif avec les grandeurs détectées pour les différentes distances de la sonde de mesure sur le corps ( 30 ) de référence.

7. Procédé selon l'une des revendications 1 à 6,
**caractérisé en ce que**
on effectue la détermination de l'épaisseur de la paroi ( 5 ) de l'élément constitutif
- en faisant varier la fréquence du champ magnétique variable dans le temps,
- en détectant, comme la au moins une grandeur la perméabilité de la paroi en fonction de la fréquence du champ magnétique variable dans le temps, et
- en déterminant l'épaisseur de la paroi à partir de la courbe de la perméabilité en fonction de la fréquence.

8. Procédé selon l'une des revendications précédentes,
**caractérisé en ce que**
l'on utilise un SQUID comme sonde ( 20 ) de mesure.
